# EUROPEAN PATENT APPLICATION

(11) **EP 4 497 913 A1**
(43) Date of publication of application: **29.01.2025**
(21) Application number: 24188087.1
(22) Date of filing: 11.07.2024
(51) Int. Cl.: F01D 21/00

(54) **IN SITU ENGINE AIRFOIL PROCESS COMPENSATED RESONANCE TESTING**

(30) Priority: 14.07.2023 US 202318352911
(71) Applicant: RTX Corporation, Farmington, CT 06032 (US)
(72) Inventor: KERNOZICKY, Garrett, Mansfield (US); PHAN, Uyen, Arcadia (US); PRIHAR, Ron I., West Hartford (US)
(74) Representative: Dehns

(57) **Abstract**

An inspection system (400) for in-situ identification of defects (140) associated with a component (103) of an assembled engine is provided. The system (400) includes an inspection device (404) and a controller (402). The controller (402) is configured to generate, via the inspection device (404), one or more first signals in proximity to the component (103); receive, via the inspection device (404), data associated with the one or more first signals; and apply an inspection process to the data to determine whether the component (103) includes a defect (140).

## Description

### FIELD

The present disclosure relates to repair analysis methods and systems, and more particularly, the repair analysis systems and methods for bladed rotors of gas turbine engines.

### BACKGROUND

Gas turbine engines (such as those used in electrical power generation or used in modern aircraft) typically include a compressor, a combustor section, and a turbine. The compressor and the turbine typically include a series of alternating rotors and stators. A rotor generally includes a rotor disk and a plurality of blades. The rotor may be an integrally bladed rotor ("IBR") or a mechanically bladed rotor.

The rotor disk and blades in the IBR are one piece (i.e., monolithic, or nearly monolithic) with the blades spaced around the circumference of the rotor disk. Conventional IBRs may be formed using a variety of technical methods including integral casting, machining from a solid billet, or by welding or bonding the blades to the rotor disk.

The operation of gas turbine engines may be affected by foreign object damage (FOD) or domestic object damage (DOD) damage to blades of the IBR. Typically, the damage is addressed by visual examination of damage utilizing borescopes. However, typical borescopes have known limitations in their detectability of damage. Accordingly, if damage is noted using a borescope, the result may require a disassembly of the gas turbine engine so that the damage may be verified and addressed.

### SUMMARY

An inspection system for in-situ identification of defects associated with a component of an assembled engine is disclosed herein. The inspection system includes an inspection device and a controller. The controller is configured to generate, via the inspection device, one or more first signals in proximity to the component; receive, via the inspection device, data associated with the one or more first signals; and apply an inspection process to the data to determine whether the component includes a defect.

In various embodiments, the inspection process is at least one of vibratory resonance or process compensated resonance testing (PCRT). In various embodiments, the inspection device is configured to be inserted through a port on an inner case of the assembled engine to access the component. In various embodiments, the component is a blade of an integrally bladed rotor of the assembled engine.

In various embodiments, the inspection device includes a probe. In various embodiments, the probe further includes a plurality of signal generators configured to generate the one or more first signals in proximity to the component; and a signal receiver configured to receive one or more second signals associated with the one or more first signals and generate the data. In various embodiments, the probe is positioned at substantially a distal end of the inspection device.

In various embodiments, the inspection device includes a positioning assistant. In various embodiments, the controller is configured to position a distal end of the inspection device in the proximity to the component utilizing information received from the positioning assistant. In various embodiments, the positioning assistant comprises at least one sensor and wherein the at least one sensor is a Hall effect sensor, an optical sensor, or a resolver. In various embodiments, the positioning assistant is positioned at the distal end of the inspection device.

In various embodiments, the inspection device includes a plurality of configurable segments. In various embodiments, each segment of the plurality of configurable segments may be configured to be either rigid or flexible.

Also disclosed herein is an inspection device for in-situ identification of defects associated with a component of an assembled engine, The inspection device includes a plurality of configurable segments; a positioning assistant; and a probe, wherein the probe is configured to: generate one or more first signals in proximity to the component; and receive data associated with the one or more first signals.

In various embodiments, the probe further includes a plurality of signal generators configured to generate the one or more first signals in proximity to the component; and a signal receiver configured to receive one or more second signals associated with the one or more first signals and generate the data. In various embodiments, the probe is positioned at substantially a distal end of the inspection device.

In various embodiments, the positioning assistant provides information to position a distal end of the inspection device in the proximity to the component. In various embodiments, the positioning assistant comprises at least one sensor and wherein the at least one sensor is a Hall effect sensor, an optical sensor, or a resolver. In various embodiments, the positioning assistant is positioned at the distal end of the inspection device.

In various embodiments, each segment of the plurality of configurable segments may be configured to be either rigid or flexible. In various embodiments, the inspection device is configured to couple to a controller mechanically, electrically, or communicatively. In various embodiments, the inspection device is configured to be inserted through a port on an inner case of the assembled engine to access the component. In various embodiments, the component is a blade of an integrally bladed rotor of the assembled engine.

The present disclosure may include any one or more of the individual features disclosed above and/or below alone or in any combination thereof.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1A illustrates a cross-sectional view of a gas-turbine engine, in accordance with various embodiments.
FIG. 1B illustrates a cross-sectional view of a high-pressure compressor, in accordance with various embodiments.
FIG. 2 illustrates a front view of a bladed rotor, in accordance with various embodiment.
FIG. 3 illustrates a portion of an inspected bladed rotor, in accordance with various embodiments.
FIG. 4 illustrates a perspective view of a system for detecting visual and non-visual defects to and within the blades of the IBR, in accordance with various embodiments
FIG. 5 illustrates a schematic view of a controller an inspection system, in accordance with various embodiments.

### DETAILED DESCRIPTION

The detailed description of embodiments herein makes reference to the accompanying drawings, which show embodiments by way of illustration. While these embodiments are described in sufficient detail to enable those skilled in the art to practice the disclosure, it should be understood that other embodiments may be realized and that logical, chemical, and mechanical changes may be made without departing from the spirit and scope of the disclosure. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option. Further, any steps in a method discussed herein may be performed in any suitable order or combination. Additionally, any reference to without contact (or similar phrases) may also include reduced contact or minimal contact. It should also be understood that unless specifically stated otherwise, references to "a," "an," or "the" may include one or more than one and that reference to an item in the singular may also include the item in the plural. Further, all ranges may include upper and lower values and all ranges and ratio limits disclosed herein may be combined.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion.

As discussed previously, operation of gas turbine engines may be affected by foreign object damage (FOD) or domestic object damage (DOD) damage to blades of the integrally bladed rotor ("IBR"). Typically, the damage is addressed by visual examination of damage utilizing borescopes. However, typical inspection processes have known limitations in their detectability of damage. Accordingly, if damage is noted using typical inspection processes, the result may require a disassembly of the gas turbine engine so that the damage may be verified and addressed.

In order to address the deficiencies of prior inspection methods, in various embodiments, nondestructive examination (NDE) methods such as vibrational resonance or process compensated resonance testing (PCRT) are utilized to identify both visual and non-visual metallurgy, cracks, erosion, or geometric variation, among others, defects to and within the blades of the IBR. In various embodiments, an inspection device is provided to convey PCRT probes into an assembled engine through ports in the assemble engine. In various embodiments, the inspection device includes a plurality of segments that may each operate in either a flexible or rigid manner. In various embodiments, the inspection device may be either manually or robotically controlled. In various embodiments, the inspection device has a plurality of PCRT probes positioned at a distal end of the inspection device. In various embodiments, the inspection device may be controlled so as to position the PCRT probes in proximity to the blades in order to inspect the blades. In various embodiments, the inspection device may include an appendage to index the PCRT probes in relation to the blades or the blades' adjacent platforms.

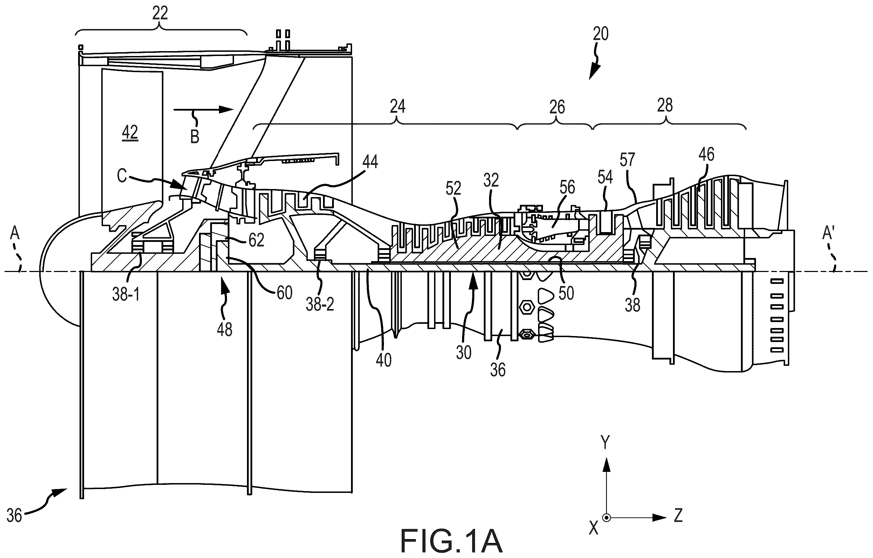

With reference to FIG. 1A, a gas turbine engine 20 is illustrated shown according to various embodiments. Gas turbine engine 20 may be a two-spool turbofan that generally incorporates a fan section 22, a compressor section 24, a combustor section 26, and a turbine section 28. In operation, fan section 22 may drive air along a path of bypass airflow B while compressor section 24 may drive air along a core flow path C for compression and communication into combustor section 26 then expansion through turbine section 28. Although depicted as a turbofan gas turbine engine 20 herein, it should be understood that the concepts described herein are not limited to use with turbofans as the teachings may be applied to other types of turbine engines.

Gas turbine engine 20 may generally include a low-speed spool 30 and a high-speed spool 32 mounted for rotation about an engine central longitudinal axis A-A' relative to an engine static structure 36 or engine case via several bearing systems 38, 38-1, etc. Engine central longitudinal axis A-A' is oriented in the Z direction on the provided X-Y-Z axes. It should be understood that various bearing systems 38 at various locations may alternatively or additionally be provided, including for example, bearing system 38, bearing system 38-1, etc.

Low-speed spool 30 may generally include an inner shaft 40 that interconnects a fan 42, a low-pressure compressor 44, and a low-pressure turbine 46. Inner shaft 40 may be connected to fan 42 through a geared architecture 48 that may drive the fan 42 at a lower speed than low-speed spool 30. Geared architecture 48 may include a gear assembly 60 enclosed within a gear housing 62. Gear assembly 60 couples the inner shaft 40 to a rotating fan structure. High-speed spool 32 may include an outer shaft 50 that interconnects a high-pressure compressor 52 and high-pressure turbine 54. A combustor 56 may be located between high-pressure compressor 52 and high-pressure turbine 54. A mid-turbine frame 57 of engine static structure 36 may be located generally between high-pressure turbine 54 and low-pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow may be compressed by low-pressure compressor 44 then high-pressure compressor 52, mixed and burned with fuel in combustor 56, then expanded over high-pressure turbine 54 and low-pressure turbine 46. Turbines 46, 54 rotationally drive the respective low-speed spool 30 and high-speed spool 32 in response to the expansion.

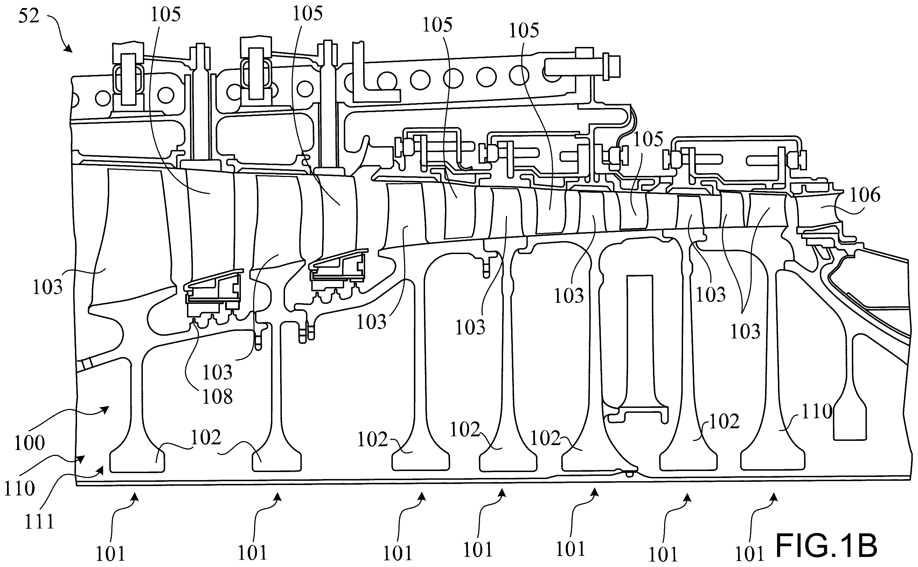

In various embodiments, and with reference to FIG. 1B, high-pressure compressor 52 of the compressor section 24 of gas turbine engine 20 is provided. The high-pressure compressor 52 includes a plurality of blade stages 101 (i.e., rotor stages) and a plurality of vane stages 105 (i.e., stator stages). The blade stages 101 may each include an integrally bladed rotor ("IBR") 100, such that the blades 103 and rotor disks 102 are formed from a single integral component (i.e., a monolithic component formed of a single piece). Although described herein with respect to an IBR 100, the present disclosure is not limited in this regard. For example, the inspection, analysis, and repair systems disclosed herein may be utilized with bladed rotors formed of separate blades 103 and rotor disks 102 and still be within the scope of this disclosure.

The blades 103 extend radially outward from the rotor disk 102. The gas turbine engine 20 may further include an exit guide vane stage 106 that defines the aft end of the high-pressure compressor 52. Although illustrated with respect to high-pressure compressor 52, the present disclosure is not limited in this regard. For example, the low-pressure compressor 44 may include a plurality of blade stages 101 and vane stages 105, each blade stage in the plurality of blade stages 101 including the IBR 100 and still be within the scope of this disclosure. In various embodiments, the plurality of blade stages 101 form a stack of IBRs 110, which define, at least partially, a rotor module 111 of the high-pressure compressor 52 of the gas turbine engine 20.

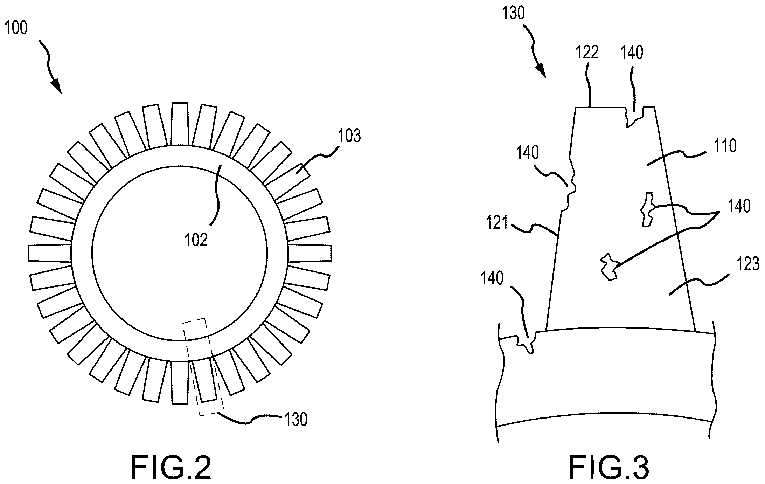

Referring now to FIG. 2, a front view of an IBR 100 is illustrated, in accordance with various embodiments. The IBR 100 includes a rotor disk 102 and a plurality of blades 103 extending radially outward from the rotor disk 102.

When debris is ingested into the gas turbine engine 20, the debris may pass into the primary flow path. Due to the rotation of the blades 103 in the primary flow path, the debris may contact one or more of the blades 103. This contact may cause damage either foreign object damage (FOD) or domestic object damage (DOD) damage to a blade 103 or a set of the blades 103. Disclosed herein are systems and methods for inspection to identifying both visual and non-visual metallurgy, cracks, erosion, or geometric variation, among others, defects of an IBR 100. The systems and methods disclosed herein facilitate both visual (surface) damage, i.e. surface metallurgy, cracks, erosion, or geometric variation, among others, in a line of sight, and non-visual (subsurface) damage, i.e. subsurface metallurgy, cracks, erosion, or geometric variation, among others, beyond line of sight) of an IBR 100 without disassembly of the gas turbine engine, such as the gas turbine engine 20 of FIG. 1A. In this regard, the systems and methods disclosed herein provide an inspection system to detect both visual and non-visual defects to and within the blades of the IBR via ports in the assembled gas turbine engine, in accordance with various embodiments.

With combined reference to FIGS. 2 and 3, a damaged portion 130 from FIG. 2 of an IBR 100 including a substantial number of defects 140 resulting from use of the IBR 100 in the gas turbine engine 20 from FIG. 1A over time. The size and shape of the defects 140 illustrated in FIG. 3 are exaggerated for illustrative effect. Further, the defects 140 may extend to all the blades 103 of the IBR 100, the rotor disk 102, a set of the blades 103 of the IBR 100, a single blade in the blades 103, or the like.

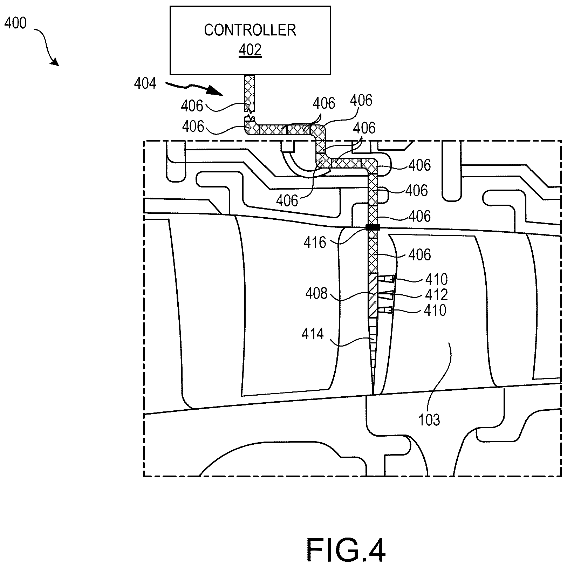

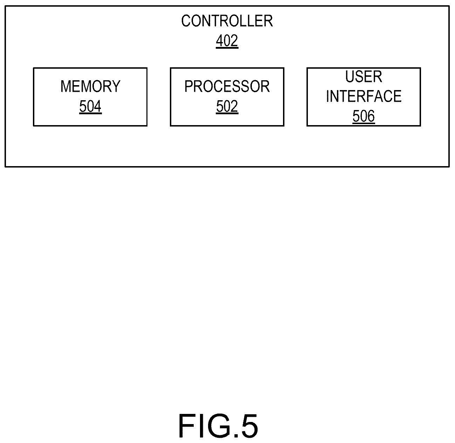

Referring now to FIGS. 4 and 5, a perspective view of a system for detecting visual and non-visual defects to and within the blades of the IBR is illustrated, in accordance with various embodiments. In various embodiments, the system 400 comprises a controller 402 and an inspection device 404. In various embodiments, a proximal end of the inspection device is mechanically, electrically, and/or communicatively coupled to the controller 402. In various embodiments, the controller 402 includes a processor 502, a memory 504, and a user interface 506 for controlling the inspection device 404, i.e. controlling various components of the inspection device 404 in order to inspect blade 103 of the IBR. In various embodiments, the processor 502 may be a general-purpose processor, a digital signal processor (DSP), an application specific integrated circuit (ASIC), a field programable gate array (FPGA) or other programable logic device, discrete gate or transistor logic, discrete hardware components, or any combination thereof. The processor 502 may be configured to implement various logical operations in response to an execution of instructions, for example, instructions stored in memory 504 which is a non-transitory, tangible, computer-readable medium configured to communicate with processor 502.

System program instructions and/or controller instructions may be loaded onto a non-transitory, tangible computer-readable medium having instructions stored thereon that, in response to execution by the processor 502, cause the processor 502 to perform various operations. The term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in *In Re Nuijten* to fall outside the scope of patentable subject matter under 35 U.S.C. § 101.

In various embodiments, responsive to receiving input via user interface 506, the controller 402 is configured to send one or more commands to the various components of the inspection device 404 for inspection of the blade 103. In various embodiments, the inspection device 404 includes a plurality of configurable segments 406 that operate in either a flexible or rigid manner thereby forming a flexible shaft, a probe 408 including a plurality of signal generators 410, a signal receiver 412, and a positioning assistant 414. In various embodiments, the controller 402 may be configured to snake a distal end of the inspection device 404 through a port 416 on an inner case of the gas turbine engine into an area where an inspection of the leading edge of the blade 103 of the IBR may be inspected thereby providing an in-situ engine inspection. In that regard, the controller 402 may be configured to configure each of the plurality of configurable segments 406 in order to position the distal end of the inspection device 404 into a position associated with the blade 103 using sensors included within the positioning assistant 414. In various embodiments, the distal end of the inspection device 404 may have various end effectors with a common adaptor plate to adapt to different inspection locations. In various embodiments, the position may be in proximity to a leading edge, a trailing edge, or one of the sides of the blade 103.

In various embodiments, the positioning assistant 414 may include sensor(s) such as Hall effect sensor(s), optical sensor(s), resolver(s), among others. In various embodiments, the positioning assistant 414 may include sensor(s) configured to detect an angular position of the distal end of the inspection device 404 during inspection of the blade 103. In this regard, during inspection of the blade 103, the controller 402 receives sensor data from the positioning assistant 414. The controller 402 may utilize the sensor data received from the positioning assistant 414 to correlate an angular position of the blade 103 being inspected. In various embodiments, the blade 103 may remain stationary throughout an inspection process and only the inspection device 404 may move. Thus, coordinates of the inspection device 404 may be determined via sensor(s) in the positioning assistant 414 to inspect the blade 103.

Once in position in proximity to the blade 103, in various embodiments, the controller 402 is configured to send one or more commands to the probe 408 to inspect the blade 103 using the plurality of signal generators 410 and the signal receiver 412. In various embodiments, responsive to receiving the command, in various embodiments, the plurality of signal generators 410 generates signal waves that bounce off one or more surfaces of the blade 103 and are received by the signal receiver 412 thereby identifying visual (surface) damage data, i.e. surface metallurgy, cracks, erosion, or geometric variation, among others, in a line of sight of the blade 103 of the IBR. In various embodiments, responsive to receiving the command, in various embodiments, the plurality of signal generators 410 generates signal waves that penetrate one or more surfaces of the blade 103 which then rebound and are received by the signal receiver 412 thereby identifying non-visual (subsurface) damage data, i.e. subsurface metallurgy, cracks, erosion, or geometric variation, among others, beyond line of sight.

In various embodiments, the signal receiver 412 routes the received signals to the controller 402. In various embodiments, the controller 402 may then apply nondestructive examination (NDE) methods such as vibrational resonance or process compensated resonance testing (PCRT), which is pattern recognition to the entire spectra of the blade 103 to determine whether the blade 103 includes a defect. In various embodiments, the controller 402 may also produce images of the blade 103 via user interface 506.

Thus, the PCRT inspection process provides an enhanced ability to detect both visual (surface) damage, i.e. surface metallurgy, cracks, erosion, or geometric variation, among others, in a line of sight, and non-visual (subsurface) damage, i.e. subsurface metallurgy, cracks, erosion, or geometric variation, among others, beyond line of sight. Performing the PCRT inspection process in situ enhances damage detectability over typical inspection processes.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is intended to invoke 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. An inspection system for in-situ identification of defects associated with a component of an assembled engine, the inspection system comprising:
an inspection device; and
a controller, wherein the controller is configured to:
generate, via the inspection device, one or more first signals in proximity to the component;
receive, via the inspection device, data associated with the one or more first signals; and
apply an inspection process to the data to determine whether the component includes a defect.

2. The inspection system of claim 1, wherein the inspection process is at least one of vibratory resonance or process compensated resonance testing (PCRT).

3. The inspection system of claim 1 or 2, wherein the inspection device is configured to be inserted through a port on an inner case of the assembled engine to access the component.

4. The inspection system of any preceding claim, wherein the component is a blade of an integrally bladed rotor of the assembled engine.

5. The inspection system of any preceding claim, wherein the inspection device comprises:
a probe, wherein the probe further comprises:
a plurality of signal generators configured to generate the one or more first signals in proximity to the component; and
a signal receiver configured to receive one or more second signals associated with the one or more first signals and generate the data.

6. The inspection system of claim 5, wherein the probe is positioned at substantially a distal end of the inspection device.

7. The inspection system of any preceding claim, wherein the inspection device comprises:
a positioning assistant,
wherein the controller is configured to:
position a distal end of the inspection device in the proximity to the component utilizing information received from the positioning assistant.

8. The inspection system of claim 7, wherein the positioning assistant comprises at least one sensor and wherein the at least one sensor is a Hall effect sensor, an optical sensor, or a resolver, and/or wherein the positioning assistant is positioned at the distal end of the inspection device.

9. The inspection system of any preceding claim, wherein the inspection device comprises:
a plurality of configurable segments, wherein each segment of the plurality of configurable segments may be configured to be either rigid or flexible.

10. An inspection device for in-situ identification of defects associated with a component of an assembled engine, comprising:
a plurality of configurable segments;
a positioning assistant; and
a probe, wherein the probe is configured to:
generate one or more first signals in proximity to the component; and
receive data associated with the one or more first signals.

11. The inspection device of claim 10, wherein the probe further comprises:
a plurality of signal generators configured to generate the one or more first signals in proximity to the component; and
a signal receiver configured to receive one or more second signals associated with the one or more first signals and generate the data.

12. The inspection device of claim 10 or 11, wherein the probe is positioned at substantially a distal end of the inspection device.

13. The inspection device of any of claims 10 to 12, wherein the positioning assistant provides information to position a distal end of the inspection device in the proximity to the component, and/or wherein the positioning assistant comprises at least one sensor and wherein the at least one sensor is a Hall effect sensor, an optical sensor, or a resolver, and/or wherein the positioning assistant is positioned at the distal end of the inspection device.

14. The inspection device of any of claims 10 to 13, wherein each segment of the plurality of configurable segments may be configured to be either rigid or flexible, and/or wherein the component is a blade of an integrally bladed rotor of the assembled engine.

15. The inspection device of any of claims 10 to 14, wherein the inspection device is configured to couple to a controller mechanically, electrically, or communicatively, and/or wherein the inspection device is configured to be inserted through a port on an inner case of the assembled engine to access the component.
